# EUROPEAN PATENT APPLICATION

(11) **EP 4 321 456 A1**
(43) Date of publication of application: **14.02.2024**
(21) Application number: 23184727.8
(22) Date of filing: 11.07.2023
(51) Int. Cl.: B65G 27/20, B65G 47/90, B06B 1/16

(54) **VIBRATION GENERATION DEVICE AND PICKUP SYSTEM**

(30) Priority: 21.07.2022 JP 2022116242
(71) Applicant: Seiko Epson Corporation, Tokyo 160-8801 (JP)
(72) Inventor: TAKEUCHI, Takayuki, Suwa-shi, Nagano, 392-8502 (JP)
(74) Representative: MERH-IP Matias Erny Reichl Hoffmann Patentanwälte PartG mbB

(57) **Abstract**

A vibration generation device includes a base, a vibrating unit including a trough including a placement surface on which a workpiece is placed, a spring unit configured to couple the base and the vibrating unit, a vibration generating unit configured to vibrate the vibrating unit while elastically deforming the spring unit, and an attenuation unit configured to couple the base and the vibrating unit and attenuate the vibration of the vibrating unit. The attenuation unit includes a base side coupling section coupled to the base, a vibrating unit side coupling section coupled to the vibrating unit, and a viscoelastic member interposed between the base side coupling section and the vibrating unit side coupling section in each of a first direction orthogonal to the placement surface and a second direction orthogonal to the first direction.

## Description

The present application is based on, and claims priority from JP Application Serial Number 2022-116242, filed July 21, 2022, the disclosure of which is hereby incorporated by reference herein in its entirety.

### BACKGROUND

### 1. Technical Field

The present disclosure relates to a vibration generation device and a pickup system.

### 2. Related Art

A vibration transfer device described in Japanese Utility Model Registration No. 3175501 (Patent Literature 1) includes a base, a plurality of spring legs erected on the base, a frame supported at the upper ends of the plurality of spring legs, a conveying trough attached to the upper side of the frame, a motor base attached to the lower side of the frame, and three vibration motors attached to the motor base. The vibration transfer device can apply vibration in a fixed direction to the conveying trough by individually controlling driving of the three vibration motors.

In the vibration transfer device described in Patent Literature 1 described above, it is difficult to quickly attenuate residual vibration of the conveying trough after the vibration motors are stopped. For example, it is easily conceivable to quickly attenuate the residual vibration of the conveying trough using a damping device (a damper) that couples the base and the frame. However, even if the damping device is used, it is difficult to exert a damping force against vibrations in various directions such as a vibration in the vertical direction, a vibration in the horizontal direction, and a vibration in an oblique direction.

### SUMMARY

A vibration generation device according to an aspect of the present disclosure includes:
a base;
a vibrating unit including a trough including a placement surface on which a workpiece is placed;
a spring unit configured to couple the base and the vibrating unit;
a vibration generating unit configured to vibrate the vibrating unit while elastically deforming the spring unit; and
an attenuation unit configured to couple the base and the vibrating unit and attenuate the vibration of the vibrating unit, wherein
the attenuation unit includes a base side coupling section coupled to the base, a vibrating unit side coupling section coupled to the vibrating unit, and a viscoelastic member interposed between the base side coupling section and the vibrating unit side coupling section in each of a first direction orthogonal to the placement surface and a second direction orthogonal to the first direction.

A pickup system according to an aspect of the present disclosure includes:
a vibration generation device on which a workpiece is placed;
a vision configured to image the workpiece placed on the vibration generation device; and
a robot configured to pick up, based on an imaging result of the vision, the workpiece placed on the vibration generation device, wherein
the vibration generation device includes:
   a base;
   a vibrating unit including a trough including a placement surface on which the workpiece is placed;
   a spring unit configured to couple the base and the vibrating unit;
   a vibration generating unit configured to vibrate the vibrating unit while elastically deforming the spring unit; and
   an attenuation unit configured to couple the base and the vibrating unit and attenuate the vibration of the vibrating unit, and
   the attenuation unit includes a base side coupling section coupled to the base, a vibrating unit side coupling section coupled to the vibrating unit, and a viscoelastic member interposed between the base side coupling section and the vibrating unit side coupling section in each of a first direction orthogonal to the placement surface and a second direction orthogonal to the first direction.

### BRIEF DESCRIPTION OF THE DRAWINGS

FIG. 1 is a front view showing an overall configuration of a pickup system according to a first embodiment.
FIG. 2 is a front view showing a robot.
FIG. 3 is a front view of a vibration generation device.
FIG. 4 is a side view of the vibration generation device.
FIG. 5 is a side view of the vibration generation device.
FIG. 6 is a front view in which legs on the near side of the vibration generation device are omitted.
FIG. 7 is a front view for explaining driving of the vibration generation device.
FIG. 8 is a front view for explaining the driving of the vibration generation device.
FIG. 9 is a front view for explaining the driving of the vibration generation device.
FIG. 10 is a front view for explaining the driving of the vibration generation device.
FIG. 11 is an enlarged sectional view of an attenuation unit viewed from a front surface side.
FIG. 12 is an enlarged sectional view of the attenuation unit viewed from a side surface side.
FIG. 13 is an enlarged sectional view showing a modification of the attenuation unit.
FIG. 14 is an enlarged sectional view showing a modification of the attenuation unit.
FIG. 15 is an enlarged sectional view showing a modification of the attenuation unit.
FIG. 16 is a flowchart showing a driving method for the pickup system.
FIG. 17 is a front view of a vibration generation device according to a second embodiment.
FIG. 18 is a front view of a vibration generation device according to a third embodiment.
FIG. 19 is a front view of a vibration generation device according to a fourth embodiment.
FIG. 20 is a side view of the vibration generation device shown in FIG. 19.
FIG. 21 is an enlarged sectional view in which an attenuation unit included in a vibration generation device according to a fifth embodiment is viewed from a front surface side.
FIG. 22 is an enlarged sectional view in which an attenuation unit included in a vibration generation device according to a sixth embodiment is viewed from a front surface side.
FIG. 23 is an enlarged sectional view in which an attenuation unit included in a vibration generation device according to a seventh embodiment is viewed from a front surface side.
FIG. 24 is an enlarged sectional view showing a modification of the attenuation unit.
FIG. 25 is a front view of a vibration generation device according to an eighth embodiment.

### DESCRIPTION OF EXEMPLARY EMBODIMENTS

Preferred embodiments of a vibration generation device and a pickup system of the present disclosure are explained below with reference to the accompanying drawings.

### First Embodiment

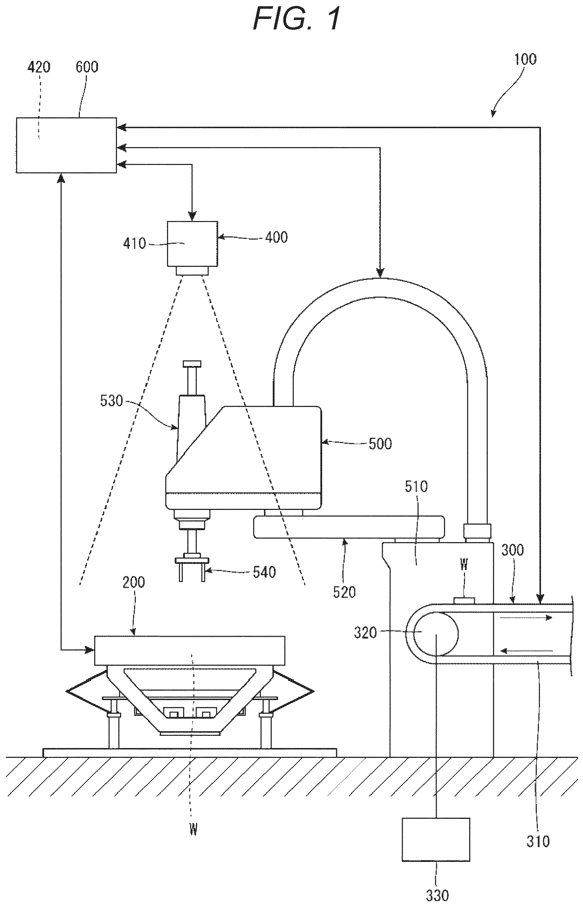

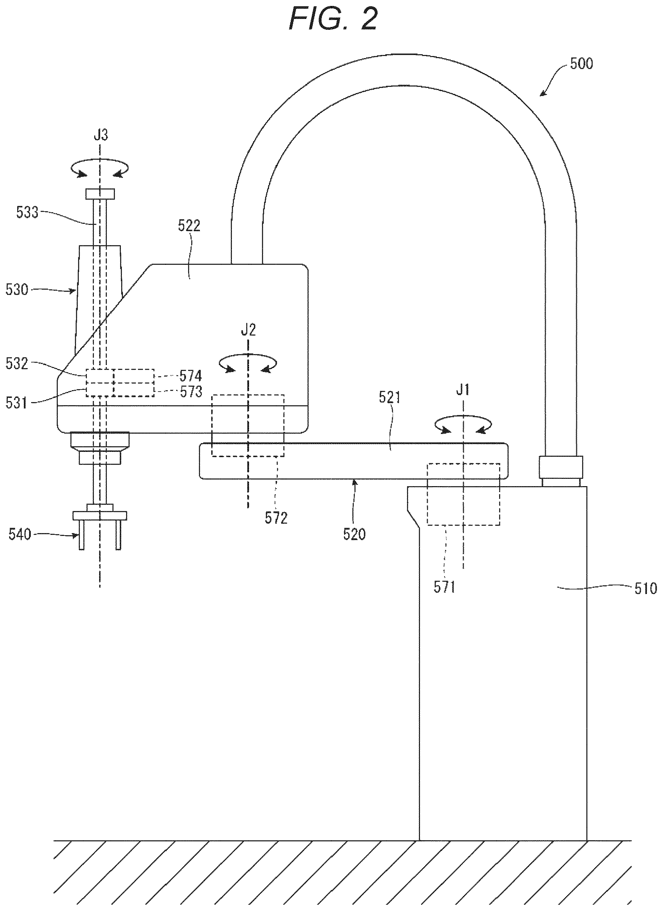

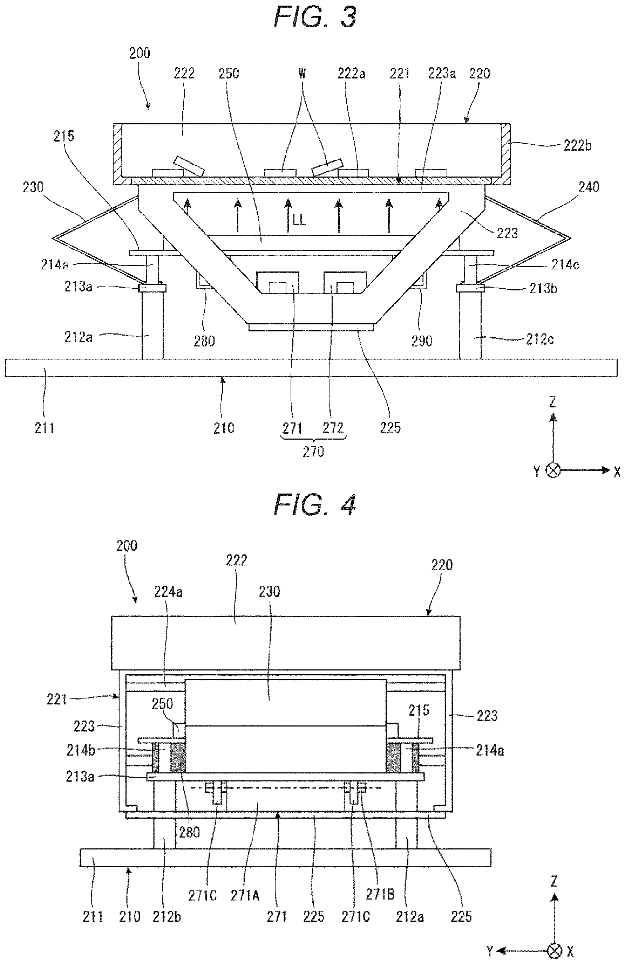

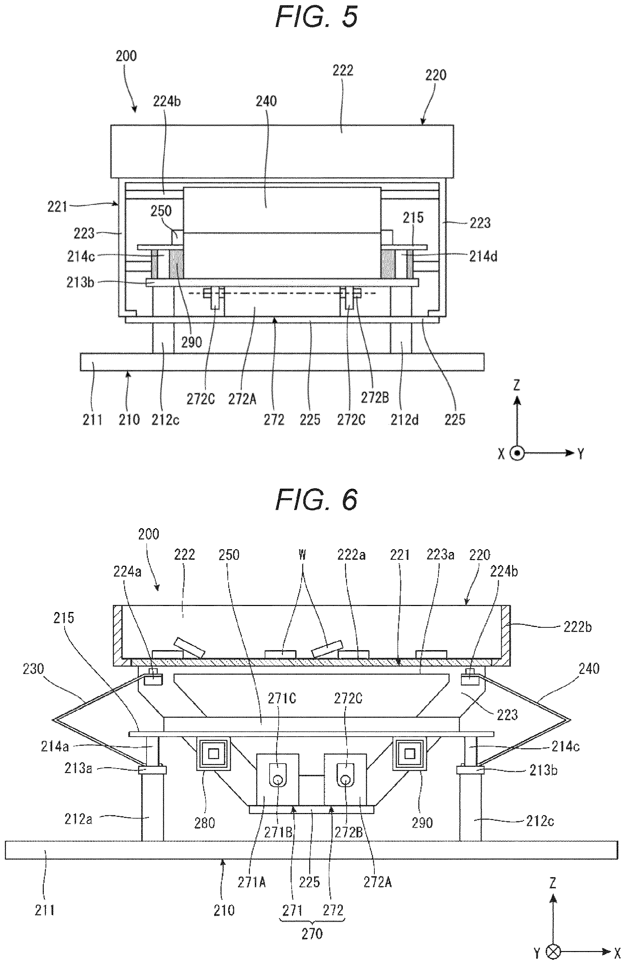

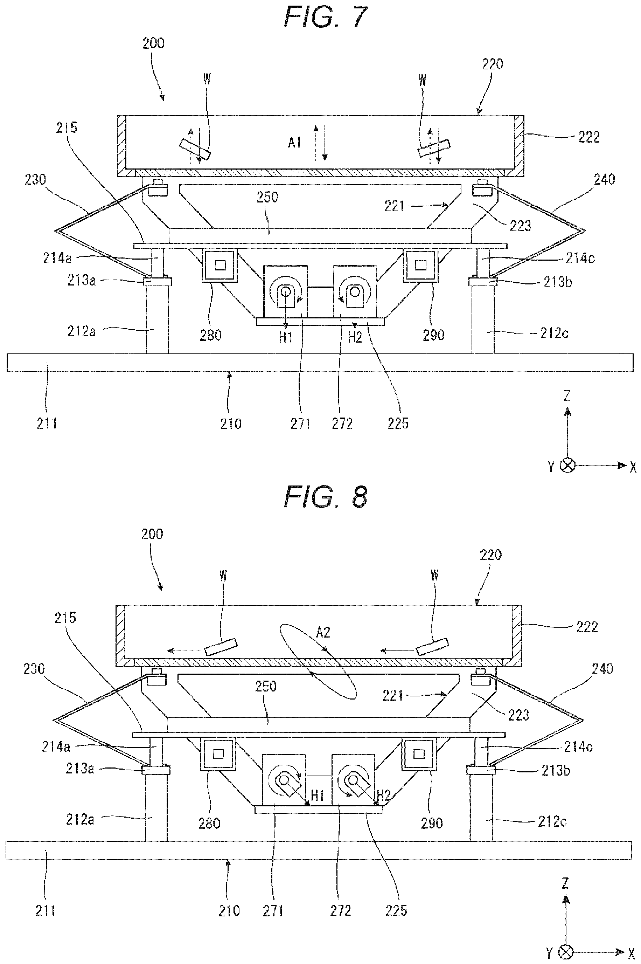

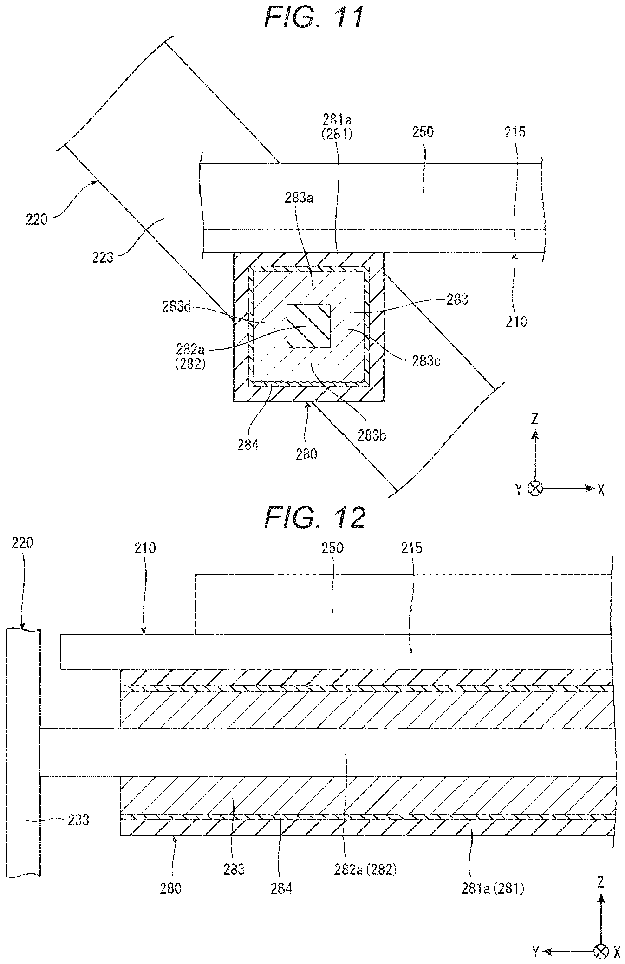

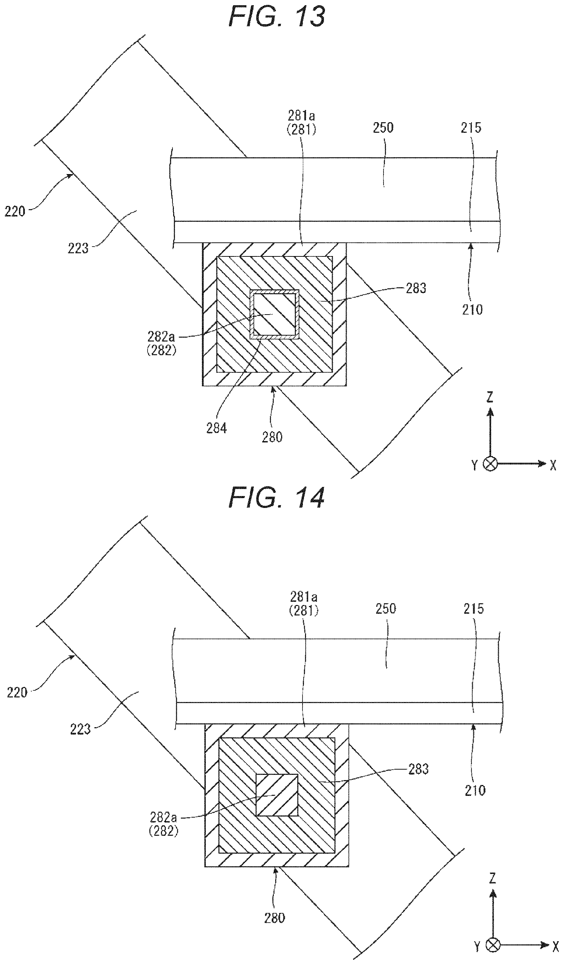

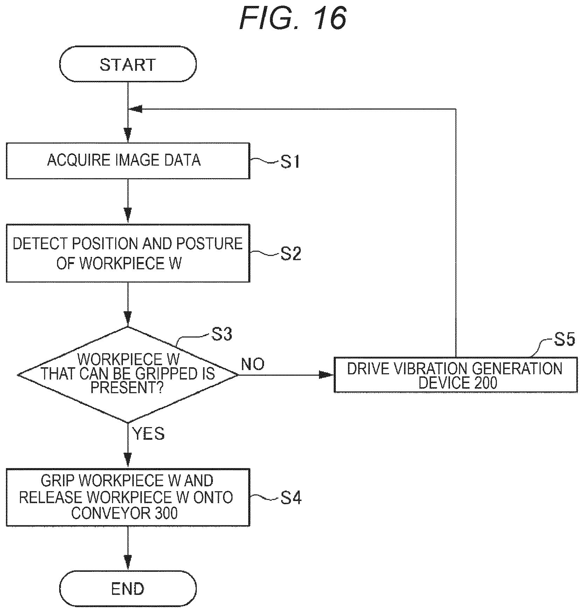

FIG. 1 is a front view showing an overall configuration of a pickup system according to a first embodiment. FIG. 2 is a front view showing a robot. FIG. 3 is a front view of a vibration generation device. FIGS. 4 and 5 are respectively side views of the vibration generation device. FIG. 6 is a front view in which legs on the near side of the vibration generation device are omitted. FIGS. 7 to 10 are respectively front views for explaining driving of the vibration generation device. FIG. 11 is an enlarged sectional view of an attenuation unit viewed from a front surface side. FIG. 12 is an enlarged sectional view of the attenuation unit viewed from a side surface side. FIGS. 13 to 15 are enlarged sectional views showing modifications of the attenuation unit. FIG. 16 is a flowchart showing a driving method for the pickup system.

A pickup system 100 shown in FIG. 1 includes a vibration generation device 200 on which a workpiece W, which is a conveyance target, is placed, a conveyor 300 functioning as a conveyance device that conveys the workpiece W, a vision 400 that images the workpiece W placed on the vibration generation device 200, a robot 500 that picks up the workpiece W placed on the vibration generation device 200 and releases the picked-up workpiece W onto the conveyor 300, and a control device 600 that controls driving of these units.

### Robot 500

The robot 500 is a SCARA robot (a horizontally articulated robot). As shown in FIG. 2, the robot 500 includes a base 510 fixed to a floor surface and a robot arm 520 coupled to the base 510. The robot arm 520 includes a first arm 521, the proximal end portion of which is coupled to the base 510, the first arm 521 turning, with respect to the base 510, around a first turning axis J1 extending in the vertical direction, and a second arm 522, the proximal end portion of which is coupled to the distal end portion of the first arm 521, the second arm 522 turning, with respect to the first arm 521, around a second turning axis J2 extending in the vertical direction.

A work head 530 is provided at the distal end portion of the second arm 522. The work head 530 includes a spline nut 531 and a ball screw nut 532 coaxially disposed at the distal end portion of the second arm 522 and a spline shaft 533 inserted through the spline nut 531 and the ball screw nut 532. The spline shaft 533 is capable of rotating, with respect to the second arm 522, around a third turning axis J3 extending in the vertical direction and is capable of rising and falling along the third turning axis J3.

An end effector 540 is attached to the lower end portion of the spline shaft 533. As the end effector 540, an end effector that is attachable and detachable and is suitable for objective work is selected as appropriate. The end effector 540 in this embodiment is a hand that clamps and holds the workpiece W.

The robot 500 includes a first driving device 571 that turns the first arm 521 around the first turning axis J1 with respect to the base 510, a second driving device 572 that turns the second arm 522 around the second turning axis J2 with respect to the first arm 521, a third driving device 573 that rotates the spline nut 531 and rotates the spline shaft 533 around the third turning axis J3, and a fourth driving device 574 that rotates the ball screw nut 532 and lifts and lowers the spline shaft 533 in a direction along the third turning axis J3.

Although not shown in FIG. 2, motors functioning as driving sources and encoders that detect rotation amounts of the motors are installed in the first, second, third, and fourth driving devices 571, 572, 573, and 574. During operation of the pickup system 100, the control device 600 executes feedback control for matching a position of the robot arm 520 indicated by outputs of the encoders and a target position that is a control target.

The robot 500 is explained above. However, the robot 500 is not particularly limited and may be, for example, a six-axis robot including a robot arm having six rotation axes.

### Conveyor 300

As shown in FIG. 1, the conveyor 300 includes a belt 310 on which the workpiece W is placed, a conveying roller 320 that feeds the belt 310, a not-shown motor that drives the conveying roller 320, and a conveyance amount sensor 330 that outputs a signal corresponding to a rotation amount of the conveying roller 320 to the control device 600. During the operation of the pickup system 100, the control device 600 executes feedback control for matching conveyance speed of the workpiece W indicated by an output of the conveyance amount sensor 330 and target conveyance speed that is a control target. Consequently, it is possible to stably convey the workpiece W at desired speed.

### Vision 400

As shown in FIG. 1, the vision 400 images the workpiece W on the vibration generation device 200 from above the vibration generation device 200 and detects the position and the posture of the workpiece W based on a captured image. The vision 400 includes a camera 410 and a detecting unit 420 that detects the position and the posture of at least one workpiece W on the vibration generation device 200 based on image data captured by the camera 410. In this embodiment, the detecting unit 420 is incorporated in the control device 600. In other words, the control device 600 functions as the detecting unit 420 as well.

The camera 410 is a 3D camera (a stereo camera), pixels of which have depth information, the 3D camera being able to capture a distance image. The pixels of the camera 410 are correlated with a world coordinate by the detecting unit 420. When the workpiece W is present within the angle of view (the visual field) of the camera 410, the camera 410 can specify a coordinate of the workpiece W based on the position of the workpiece W in image data. However, a configuration of the vision 400 is not particularly limited and, for example, may be a configuration obtained by combining a 2D camera and a depth sensor or may be a configuration in which a measurement device that measures a three-dimensional shape with a phase shift method is used.

### Vibration generation device 200

The vibration generation device 200 includes, as shown in FIG. 3, a base 210, a vibrating unit 220, a pair of spring units 230 and 240 that couples the base 210 and the vibrating unit 220, a vibration generating unit 270 that vibrates a trough 222, a pair of attenuation units 280 and 290 that couples the base 210 and the vibrating unit 220, and a light 250. The vibrating unit 220 includes a frame 221 and the box-shaped trough 222 on which the workpiece W is placed. The vibration generating unit 270 includes a first vibration motor 271 and a second vibration motor 272 fixed to the frame 221.

In the vibration generation device 200 having the configuration explained above, driving of the first and second vibration motors 271 and 272 are controlled by the control device 600, whereby it is possible to apply desired vibration to the vibrating unit 220 while elastically deforming the spring units 230 and 240 and change the position and the posture of the workpiece W placed on the trough 222.

In the following explanation, for convenience of explanation, three axes orthogonal to one another are represented as an X axis, a Y axis and a Z axis. A direction along the X axis is referred to as "X-axis direction" as well, a direction along the Y axis is referred to as "Y-axis direction" as well, and a direction along the Z axis is referred to as "Z-axis direction" as well. An arrow side of the axes is referred to as "plus side" as well and the opposite side is referred to as "minus side" as well. The Z-axis direction is in the vertical direction. The Z-axis direction plus side is the vertical direction upper side. The Z-axis direction minus side is the vertical direction lower side. Vertical in the present specification means not only being vertical but also being tilted with respect to vertical to a degree that can be deemed equal to vertical in the technical common sense. Similarly, horizontal in the present specification means not only being horizontal but also being tilted with respect to horizontal to a degree that can be deemed equal to horizontal in the technical common sense. Orthogonal in the present specification means not only being orthogonal but also being tilted with respect to orthogonal to a degree that can be deemed equal to orthogonal in the technical common sense.

As shown in FIGS. 4 to 6, the base 210 includes a plate-like substrate 211 and four first column sections 212a, 212b, 212c, and 212d erected upward from the substrate 211. The first column sections 212a and 212b among the four column sections 212a, 212b, 212c, and 212d deviate to the X-axis direction minus side of the substrate 211 and are disposed side by side in the Y-axis direction. On the other hand, the first column sections 212c and 212d deviate to the X-axis direction plus side of the substrate 211 and are disposed side by side in the Y-axis direction.

The base 210 includes a lower spring supporting beam 213a stretched between the upper ends of the first column sections 212a and 212b and a lower spring supporting beam 213b stretched between the upper ends of the first column sections 212c and 212d. The lower end portion of the spring unit 230 is coupled to the lower spring supporting beam 213a. The lower end portion of the spring unit 240 is coupled to the lower spring supporting beam 213b.

The base 210 includes two second columns sections 214a and 214b erected upward from the lower spring supporting beam 213a, two second column sections 214c and 214d erected upward from the lower spring supporting beam 213b, and a plate-like light supporting section 215 coupled to the upper ends of the four second column sections 214a, 214b, 214c, and 214d. The light 250 is disposed in the light supporting section 215.

The vibrating unit 220 includes the frame 221 and the trough 222 fixed to the frame 221. The trough 222 is box-like and includes a placement surface 222a configured by an inner bottom surface, the workpiece W being placed on the placement surface 222a, and a frame-like wall section 222b erected upward from the outer edge portion of the placement surface 222a. The placement surface 222a is a horizontal plane.

The placement surface 222a has light transmittance. In this embodiment, the bottom of the trough 222 is made of a material having light transmittance. The light 250 is disposed right under the trough 222. The light 250 emits light LL upward, that is, toward the trough 222 and illuminates the workpiece W in the trough 222 from the downward side via the placement surface 222a. Consequently, bright image data having a clear contour can be acquired from the camera 410. Alternatively, shutter speed of the camera 410 can be increased. Therefore, clear image data without blur can be acquired. Accordingly, it is possible to more accurately perform image recognition for the workpiece W with the vision 400.

The frame 221 is disposed on the lower side of the trough 222. The frame 221 includes a pair of legs 223 disposed side by side in the Y-axis direction. The legs 223 are plate-like and are formed in a substantially trapezoidal shape in a plan view from the Y-axis direction. Through-holes 223a for thinning-down are formed in the legs 223. Consequently, it is possible to achieve a reduction in the weight of the vibrating unit 220. It is possible to greatly vibrate the trough 222 with small energy.

The frame 221 includes a pair of upper spring supporting beams 224a and 224b extending in the Y-axis direction and stretched between the upper end portions of the pair of legs 223. The upper end portion of the spring unit 230 is coupled to the upper spring supporting beam 224a. The upper end portion of the spring unit 240 is coupled to the upper spring supporting beam 224b.

The frame 221 includes a plate-like supporting section 225 that couples the lower end portions of the pair of legs 223. The supporting section 225 is located on the lower side of the light supporting section 215. The vibration generating unit 270 is disposed in the supporting section 225.

The spring units 230 and 240 are disposed on the X-axis direction both sides of the vibrating unit 220. In this embodiment, the spring unit 230 is disposed on the X-axis direction minus side of the vibrating unit 220 and the spring unit 240 is disposed on the X-axis direction plus side of the vibrating unit 220. With the disposition explained above, the vibrating unit 220 can be supported at both ends and the posture of the vibrating unit 220 is stabilized.

The spring units 230 and 240 are configured by leaf springs. This makes it easy to configure the spring units 230 and 240. The spring units 230 and 240 have a shape bent in the center. The upper end portions of the spring units 230 and 240 are coupled to the upper spring supporting beams 224a and 224b and the lower end portions of the spring units 230 and 240 are coupled to the lower spring supporting beams 213a and 213b. However, configurations of the spring units 230 and 240 are not particularly limited. The spring units 230 and 240 may be, for example, coil springs.

As shown in FIG. 6, the vibration generating unit 270 includes the first vibration motor 271 and the second vibration motor 272. The first vibration motor 271 and the second vibration motor 272 are respectively disposed in the supporting section 225. The first vibration motor 271 and the second vibration motor 272 are respectively located on the lower side of the light supporting section 215. Consequently, the light LL of the light 250 is irradiated on the trough 222 without being blocked by the first vibration motor 271 and the second vibration motor 272.

As shown in FIG. 4, the first vibration motor 271 includes a main body section 271A that houses a stator and a rotor not shown in FIG. 4, a rotating shaft 271B received by the main body section 271A, and a pair of eccentric weights 271C disposed at both the end portions of the rotating shaft 271B. The pair of eccentric weights 271C is disposed with directions aligned. When the first vibration motor 271 is driven, the rotating shaft 271B rotates and centrifugal vibration is caused by the action of the pair of eccentric weights 271C.

Similarly, as shown in FIG. 5, the second vibration motor 272 includes a main body section 272A that houses a stator and a rotor not shown in FIG. 5, a rotating shaft 272B received by the main body section 272A, and a pair of eccentric weights 272C disposed at both the end portions of the rotating shaft 272B. The pair of eccentric weights 272C is disposed with directions aligned. When the second vibration motor 272 is driven, the rotating shaft 272B rotates and centrifugal vibration is caused by the action of the pair of eccentric weights 272C.

However, configurations of the first and second vibration motors 271 and 272 are not particularly limited if vibration can be generated.

The rotating shafts 271B and 272B are respectively horizontal. That is, the rotating shafts 271B and 272B are parallel to the placement surface 222a. The rotating shafts 271B and 272B are disposed in parallel to each other. In this embodiment, the rotating shafts 271B and 272B extend in the Y-axis direction and rotate around the Y axis. As shown in FIG. 6, the rotating shafts 271B and 272B are located on the same horizontal plane. By disposing the first and second vibration motors 271 and 272 as explained above, it is possible to easily generate a plurality of vibrations explained below.

The vibration generating unit 270 includes a not-shown first sensor that detects rotation of the first vibration motor 271 and a not-shown second sensor that detects rotation of the second vibration motor 272. The first sensor can detect an eccentric direction H1 of the rotating shaft 271B. Similarly, the second sensor can detect an eccentric direction H2 of the rotating shaft 272B.

For example, as shown in FIG. 7, when the second vibration motors 271 and 272 are driven to rotate in opposite directions each other in a state in which both of the eccentric directions H1 and H2 face the vertical direction lower side, vibration A1 in the up-down direction is applied to the vibrating unit 220 while the spring units 230 and 240 being elastically deformed by offset and superimposition of vibration of the first vibration motor 271 and vibration of the second vibration motor 272. Consequently, the workpiece W in the trough 222 vibrates to jump up and down and can be reversed.

For example, as shown in FIG. 8, when the first and second vibration motors 271 and 272 are driven to rotate in opposite directions each other in a state in which the eccentric directions H1 and H2 face a right oblique lower side, vibration A2 in an oblique direction is applied to the vibrating unit 220 while the spring units 230 and 240 being elastically deformed by offset and superimposition of the vibration of the first vibration motor 271 and the vibration of the second vibration motor 272. Consequently, the workpiece W in the trough 222 moves to the X-axis direction minus side.

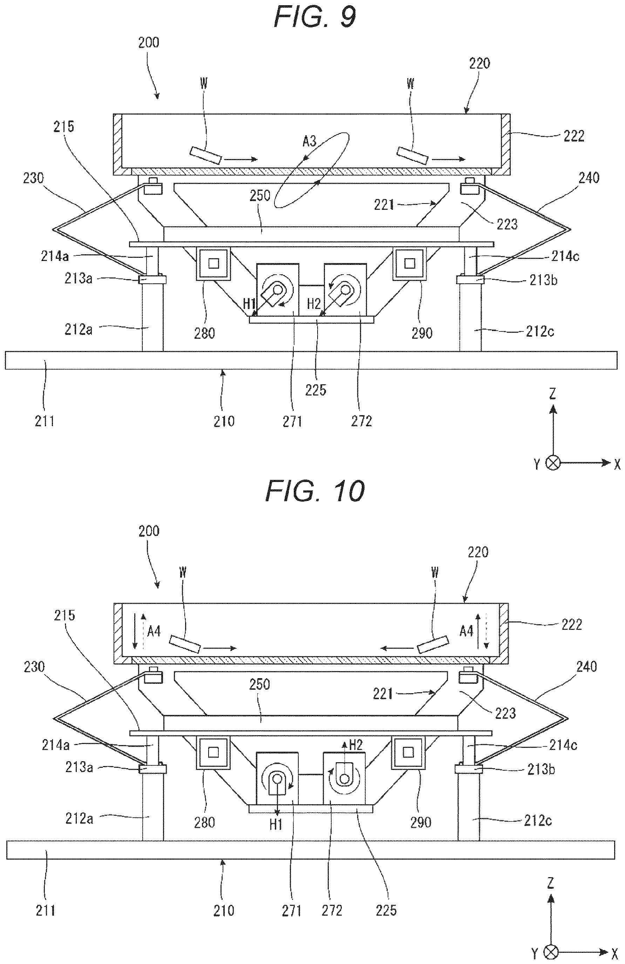

For example, as shown in FIG. 9, when the first and second vibration motors 271 and 272 are driven to rotate in opposite directions each other in a state in which the eccentric directions H1 and H2 face a left oblique lower side, vibration A3 in an oblique direction is applied to the vibrating unit 220 while the spring units 230 and 240 being elastically deformed by offset and superimposition of the vibration of the first vibration motor 271 and the vibration of the second vibration motor 272. Consequently, the workpiece W in the trough 222 moves to the X-axis direction plus side.

For example, as shown in FIG. 10, when the first and second vibration motors 271 and 272 are driven to rotate in the same direction each other in a state in which the eccentric direction H1 faces the vertical direction lower side and the eccentric direction H2 faces the vertical direction upper side, vibration A4 is applied to the vibrating unit 220 while the spring units 230 and 240 being elastically deformed by offset and superimposition of the vibration of the first vibration motor 271 and the vibration of the second vibration motor 272. Consequently, the workpiece W in the trough 222 moves in the X-axis direction to come close to the center.

The attenuation units 280 and 290 attenuate the residual vibration of the vibrating unit 220 after the driving of the first and second vibration motors 271 and 272 is stopped. Accordingly, the residual vibration of the trough 222 quickly subsides. Subsequent work, specifically, imaging of the workpiece W by the vision 400 can be performed at earlier time. Therefore, work efficiency of the pickup system 100 is improved.

As shown in FIG. 6, the attenuation units 280 and 290 are disposed side by side in the X-axis direction. The first and second vibration motors 271 and 272 are disposed between the attenuation units 280 and 290. With the disposition explained above, the attenuation units 280 and 290 can be more greatly separated. It is possible to more effectively attenuate the residual vibration of the vibrating unit 220. However, the disposition of the attenuation units 280 and 290 are not particularly limited. For example, the attenuation units 280 and 290 may be disposed between the first vibration motor 271 and the second vibration motor 272.

Configurations of the attenuation units 280 and 290 are explained below. However, since the attenuation units 280 and 290 have the same configuration, in the following explanation, for convenience of explanation, the attenuation unit 280 is representatively explained. Explanation is omitted about the attenuation unit 290.

As shown in FIGS. 11 and 12, the attenuation unit 280 includes a base side coupling section 281 coupled to the base 210, a vibrating unit side coupling section 282 coupled to the vibrating unit 220, and a viscoelastic member 283 interposed between the base side coupling section 281 and the vibrating unit side coupling section 282 and having viscosity or elasticity (hereinafter referred to as "viscoelasticity" as well).

The vibrating unit side coupling section 282 includes a bar-like shaft section 282a stretched between the pair of legs 223. The shaft section 282a extends in the Y-axis direction and has a rectangular, in particular, in this embodiment, square cross sectional shape. Among four surfaces included in the outer peripheral surface of the shaft section 282a, opposed two surfaces face the horizontal direction and the remaining two surfaces face the vertical direction.

The base side coupling section 281 includes a frame-like frame section 281a coupled to the light supporting section 215 at the upper end portion thereof and surrounding the shaft section 282a. The frame section 281a has an annular shape extending in the Y-axis direction and is disposed concentrically with the shaft section 282a. The frame section 281a has a rectangular, in particular, in this embodiment, square cross sectional shape. Among four surfaces included in the outer peripheral surface of the frame section 281a, opposed two surfaces face the horizontal direction and the remaining two surfaces face the vertical direction.

The viscoelastic member 283 is disposed between the shaft section 282a and the frame section 281a. When the vibrating unit 220 vibrates, the frame section 281a is displaced with respect to the shaft section 282a according to the vibration and the viscoelastic member 283 is deformed (extended or contracted) by the displacement, whereby the vibration of the vibrating unit 220 can be attenuated. The viscoelastic member 283 is disposed between the bar-like shaft section 282a and the frame-like frame section 281a in this way, whereby the configuration of the attenuation unit 280 is simplified.

The viscoelastic member 283 has an annular shape surrounding the shaft section 282a. Accordingly, the viscoelastic member 283 includes a pair of first portions 283a and 283b interposed between the shaft section 282a and the frame section 281a in the Z-axis direction, which is a first direction, orthogonal to the placement surface 222a and a pair of second portions 283c and 283d interposed between the shaft section 282a and the frame section 281a in the X-axis direction, which is a second direction, orthogonal to the Z-axis direction.

Vibration in the Z-axis direction is attenuated mainly by the first portions 283a and 283b being deformed, vibration in the X-axis direction is attenuated mainly by the second portions 283c and 283d being deformed, and vibration in the oblique direction is attenuated by both of the first portions 283a and 283b and the second portions 283c and 283d being deformed. Therefore, it is possible to exert, with a simple configuration, a damping effect on vibrations in various directions such as vibrations in the vertical direction like vibrations A1 and A4 shown in FIGS. 7 and 10 and vibrations in the oblique direction like the vibrations A2 and A3 shown in FIGS. 8 and 9. As a result, work efficiency of the pickup system 100 is improved.

The viscoelastic member 283 is joined to the inner peripheral surface of the frame section 281a via a joining member 284. On the other hand, the viscoelastic member 283 is in contact with the outer peripheral surface of the shaft section 282a without being joined to the outer peripheral surface. The viscoelastic member 283 is joined to the frame section 281a in this way, whereby the attenuation unit 280 is assembled simply by inserting the shaft section 282a into a joined body of the viscoelastic member 283 and the frame section 281a. Therefore, the attenuation unit 280 is easily assembled. Since an amount of use of the joining member 284 is smaller compared with a configuration in which the viscoelastic member 283 is joined to both of the shaft section 282a and the frame section 281a as in a sixth embodiment explained below, it is also possible to achieve a reduction in manufacturing cost. The joining member 284 is not particularly limited. For example, various adhesives can be used.

However, not only this, but, as shown in FIG. 13, the viscoelastic member 283 may be joined to the outer peripheral surface of the shaft section 282a via the joining member 284. With the configuration explained above, the same effects can be exerted. Since a joining area can be set larger in this embodiment, joining strength is increased and, therefore, it is possible to effectively prevent the viscoelastic member 283 from peeling from the frame section 281a when the shaft section 282a is inserted. As shown in FIG. 14, the viscoelastic member 283 may not be joined to both of the frame section 281a and the shaft section 282a. Consequently, since the joining member 284 is unnecessary, it is possible to achieve a further reduction in the manufacturing cost.

In a natural state, that is, a state in which the vibrating unit 220 is not vibrating, the viscoelastic member 283 is disposed between the shaft section 282a and the frame section 281a in a state in which the viscoelastic member 283 is contracted in the Z-axis direction and the X-axis direction. Consequently, a gap is less easily formed between the shaft section 282a and the viscoelastic member 283 while the attenuation unit 280 is operating. Accordingly, vibration can be more efficiently attenuated. However, not only this, but the viscoelastic member 283 may be disposed between the shaft section 282a and the frame section 281a in a state in which the viscoelastic member 283 is not contracted.

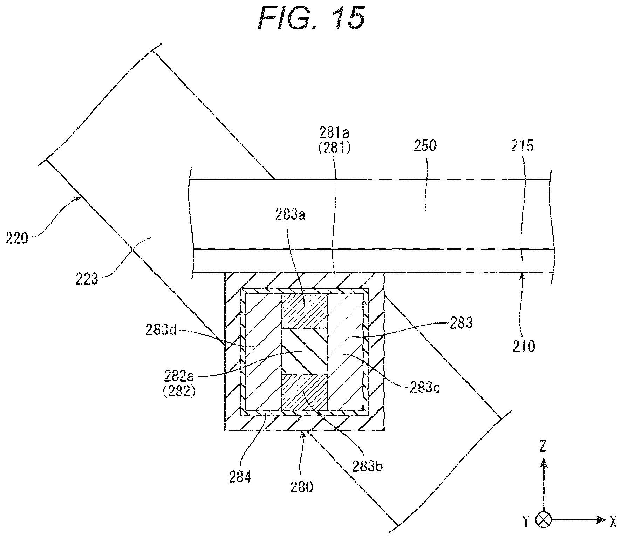

The viscoelastic member 283 in this embodiment is integrally formed. However, not only this, but, for example, as shown in FIG. 15, the viscoelastic member 283 may be divided into four portions including the first portions 283a and 283b and the second portions 283c and 283d. With the configuration explained above, by differentiating materials between the first portions 283a and 283b and the second portions 283c and 283d, it is possible to respectively independently design an attenuation ratio in the Z-axis direction and an attenuation ratio in the X-axis direction.

A constituent material of the viscoelastic member 283 is not particularly limited. Examples of the constituent material include various foamed materials such as foamed polyethylene, foamed polystyrenes, foamed polypropylene, and foamed polyurethane, various rubber materials such as natural rubber, isoprene rubber, butadiene rubber, styrene-butadiene rubber, urethane rubber, silicone rubber, and fluorocarbon rubber, and various thermoplastic elastomers such as styrene, polyolefin, polyvinylchloride, polyurethane, polyester, and polyamide elastomers. One kind of these materials can be used or two or kinds of these materials can be mixed and used. When a space in the frame section 281a is a fluid-tight space, fluid such as silicone oil or magnetic fluid may be used as the viscoelastic member 283.

### Control device 600

As shown in FIG. 1, the control device 600 controls driving of the vibration generation device 200, the conveyor 300, the vision 400, and the robot 500. The control device 600 is configured from, for example, a computer and includes a processor (a CPU) that processes information, a memory communicably connected to the processor, and an external interface that performs connection to an external device. Various programs executable by the processor are stored in the memory. The processor can read and execute the various programs and the like stored in the memory. A part or all of the components of the control device 600 may be disposed on the inner side of a housing of the robot 500. The control device 600 may be configured by a plurality of processors.

The configuration of the pickup system 100 is explained above. Subsequently, a driving method for the pickup system 100 is explained with reference to FIG. 16. First, in step S1, the control device 600 images workpieces W in the trough 222 with the camera 410 and acquires image data D in a state in which the robot 500 is set in a posture not hindering the imaging. Subsequently, in step S2, the control device 600 detects the position and the posture of at least one workpiece W based on the image data D. To detect the posture of the workpiece W, for example, template matching can be used.

Subsequently, in step S3, the control device 600 detects presence or absence of the workpiece W in a position and a posture that can be gripped by the robot 500 out of the workpieces W, the positions and the postures of which have been detected. When the workpiece W in the position and the posture that can be gripped by the robot 500 is present, in step S4, the control device 600 grips the workpiece W with the robot 500 and releases the workpiece W onto the belt 310 of the conveyor 300. Consequently, the workpiece W is conveyed to a predetermined place by the conveyor 300.

On the other hand, when the workpiece W in the position and the posture that can be gripped by the robot 500 is absent in step S3, in step S5, the control device 600 drives the vibration generation device 200, resets the positions and the postures of the workpieces W in the trough 222, and performs the driving method from step S1 again. With the driving method, the workpiece W can be more surely gripped by the robot 500.

The pickup system 100 is explained above. The vibration generation device 200 included in the pickup system 100 includes, as explained above, the base 210, the vibrating unit 220 including the trough 222 including the placement surface 222a on which the workpiece W is placed, the spring units 230 and 240 that couple the base 210 and the vibrating unit 220, the vibration generating unit 270 that vibrates the vibrating unit 220 while elastically deforming the spring units 230 and 240, and the attenuation units 280 and 290 that couple the base 210 and the vibrating unit 220 and attenuate the vibration of the vibrating unit 220. The attenuation unit 280 includes the base side coupling section 281 coupled to the base 210, the vibrating unit side coupling section 282 coupled to the vibrating unit 220, and the viscoelastic member 283 interposed between the base side coupling section 281 and the vibrating unit side coupling section 282 in each of the Z-axis direction, which is the first direction, orthogonal to the placement surface 222a and the X-axis direction, which is the second direction, orthogonal to the Z-axis direction.

With the configuration explained above, for example, it is possible to exert a damping effect on vibrations in various directions such as vibrations in the vertical direction like the vibrations A1 and A4 shown in FIGS. 7 and 10 and vibrations in the oblique direction like the vibrations A2 and A3 shown in FIGS. 8 and 9. Accordingly, work after the position and the posture of the workpiece W are changed by the vibration generation device 200, specifically, imaging of the workpiece W by the vision 400 can be performed at earlier time. Therefore, work efficiency of the pickup system 100 is improved.

As explained above, the vibration generating unit 270 includes the first vibration motor 271 and the second vibration motor 272, the rotating shafts 271B and 272B of which extend along the placement surface 222a and are parallel to each other. With the configuration explained above, by controlling the driving of the first and second vibration motors 271 and 272, it is possible to apply desired vibration to the vibrating unit 220 while elastically deforming the spring units 230 and 240 and change the position and the posture of the workpiece W placed on the trough 222.

As explained above, the second direction is the direction orthogonal to the rotating shafts 271B and 272B, that is, the X-axis direction. Consequently, vibrations in the oblique direction having components in the X-axis direction like the vibrations A2 and A3 shown in FIGS. 8 and 9 are excited by the vibration generating unit 270. With the attenuation units 280 and 290, the vibrations in the oblique direction can be attenuated.

As explained above, the two attenuation units 280 and 290 are disposed side by side in the X-axis direction and the first vibration motor 271 and the second vibration motor 272 are disposed between the two attenuation units 280 and 290. With the disposition explained above, the attenuation units 280 and 290 can be more greatly separated. It is possible to more effectively attenuate the residual vibration of the vibrating unit 220.

As explained above, one of the base side coupling section 281 and the vibrating unit side coupling section 282, in this embodiment, the vibrating unit side coupling section 282 includes the bar-like shaft section 282a and, on the other hand, in this embodiment, the base side coupling section 281 includes the frame-like frame section 281a surrounding the shaft section 282a. The viscoelastic member 283 is disposed between the shaft section 282a and the frame section 281a. Consequently, the configuration of the attenuation unit 280 is simplified.

As explained above, the viscoelastic member 283 has the annular shape surrounding the shaft section 282a. Accordingly, the viscoelastic member 283 includes the first portions 283a and 283b interposed between the shaft section 282a and the frame section 281a in the Z-axis direction, which is the first direction, orthogonal to the placement surface 222a and the second portions 283c and 283d interposed between the shaft section 282a and the frame section 281a in the X-axis direction, which is the second direction, orthogonal to the Z-axis direction. Consequently, it is possible to exert, with a simple configuration, a damping effect on vibrations in various directions such as vibrations in the vertical direction like the vibrations A1 and A4 shown in FIGS. 7 and 10 and vibrations in the oblique direction like the vibrations A2 and A3 shown in FIGS. 8 and 9.

As explained above, the viscoelastic member 283 is joined to at least one of the base side coupling section 281 and the vibrating unit side coupling section 282. In this embodiment, the viscoelastic member 283 is joined to the base side coupling section 281. Consequently, the attenuation unit 280 is easily assembled.

As explained above, the pickup system 100 includes the vibration generation device 200 on which the workpiece W is placed, the vision 400 that images the workpiece W placed on the vibration generation device 200, and the robot 500 that picks up the workpiece W placed on the vibration generation device 200 based on the imaging result of the vision 400. The vibration generation device 200 includes the base 210, the vibrating unit 220 including the trough 222 including the placement surface 222a on which the workpiece W is placed, the spring units 230 and 240 that couple the base 210 and the vibrating unit 220, the vibration generating unit 270 that vibrates the vibrating unit 220 while elastically deforming the spring units 230 and 240, and the attenuation units 280 and 290 that couple the base 210 and the vibrating unit 220 and attenuate the vibration of the vibrating unit 220. The attenuation unit 280 includes the base side coupling section 281 coupled to the base 210, the vibrating unit side coupling section 282 coupled to the vibrating unit 220, and the viscoelastic member 283 interposed between the base side coupling section 281 and the vibrating unit side coupling section 282 in each of the Z-axis direction, which is the first direction, orthogonal to the placement surface 222a and the X-axis direction, which is the second direction, orthogonal to the Z-axis direction.

With the configuration explained above, for example, it is possible to exert a damping effect on vibrations in various directions such as vibrations in the vertical direction like the vibrations A1 and A4 shown in FIGS. 7 and 10 and vibrations in the oblique direction like the vibrations A2 and A3 shown in FIGS. 8 and 9. Accordingly, work after the position and the posture of the workpiece W are changed by the vibration generation device 200, specifically, imaging of the workpiece W by the vision 400 can be performed at earlier time. Therefore, work efficiency of the pickup system 100 is improved.

### Second Embodiment

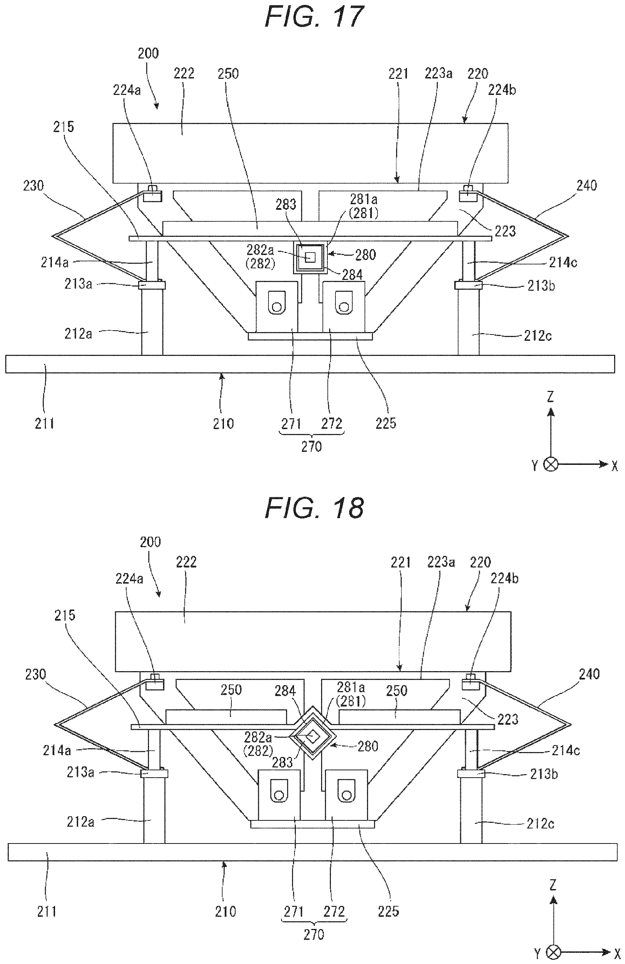

FIG. 17 is a front view of a vibration generation device according to a second embodiment.

The vibration generation device 200 according to this embodiment is the same as the vibration generation device 200 in the first embodiment explained above except that the number of attenuation units is different. In the following explanation, concerning the vibration generation device 200 in this embodiment, differences from the first embodiment explained above are mainly explained and explanation is omitted concerning similarities to the first embodiment. In the figures in this embodiment, the same components as the components in the embodiment explained above are denoted by the same reference numerals and signs.

As shown in FIG. 17, in the vibration generation device 200 in this embodiment, one attenuation unit 280 is disposed in the center of the device.

According to the second embodiment explained above, it is possible to exert the same effects as the effects in the first embodiment explained above.

### Third Embodiment

FIG. 18 is a front view of a vibration generation device according to a third embodiment.

The vibration generation device 200 according to this embodiment is the same as the vibration generation device 200 in the second embodiment explained above except that the posture of the attenuation unit 280 is different. In the following explanation, concerning the vibration generation device 200 in this embodiment, differences from the second embodiment explained above are mainly explained and explanation is omitted concerning similarities to the second embodiment. In the figures in this embodiment, the same components as the components in the embodiments explained above are denoted by the same reference numerals and signs.

As shown in FIG. 18, in the vibration generation device 200 in this embodiment, the attenuation unit 280 is disposed in a posture tilted 45° around the Y axis with respect to the configuration in the second embodiment explained above. Accordingly, among the four surfaces included in the outer peripheral surface of the frame section 281a, the opposed two surfaces are obliquely directed to extend in the direction of the vibration A2 and the remaining two surfaces are obliquely directed to extend in the direction of the vibration A3. Therefore, in particular, it is possible to further improve the damping effect on the vibrations A2 and A3.

According to the third embodiment explained above, it is possible to exert the same effects as the effects in the first embodiment explained above.

### Fourth Embodiment

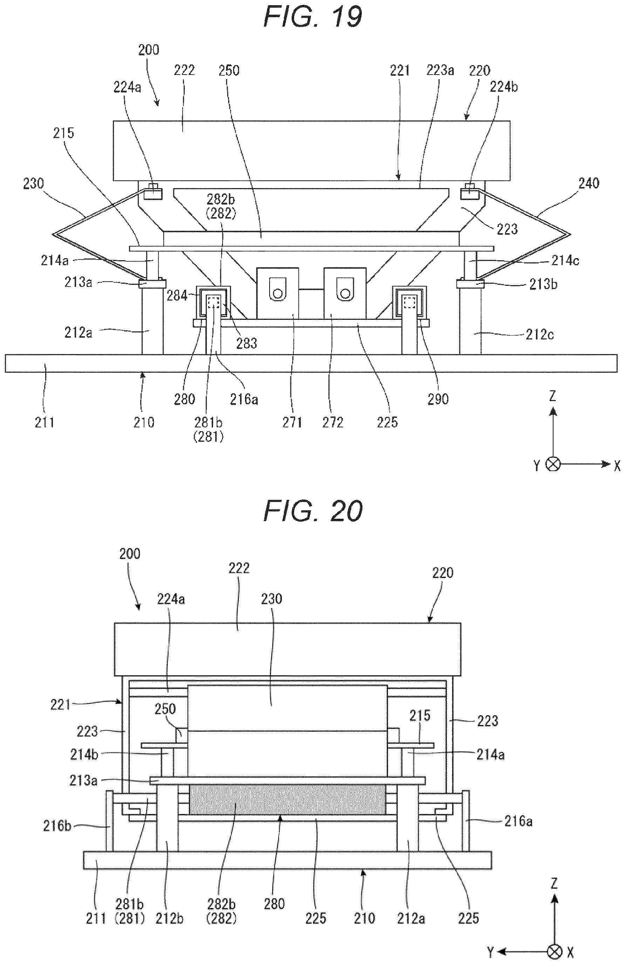

FIG. 19 is a front view of a vibration generation device according to a fourth embodiment. FIG. 20 is a side view of the vibration generation device shown in FIG. 19.

The vibration generation device 200 according to this embodiment is the same as the vibration generation device 200 in the first embodiment explained above except that configurations of the attenuation units 280 and 290 are different from the configurations in the first embodiment. In the following explanation, concerning the vibration generation device 200 in this embodiment, differences from the first embodiment explained above are mainly explained and explanation is omitted concerning similarities to the first embodiment. In the figures in this embodiment, the same components as the components in the embodiments explained above are denoted by the same reference numerals and signs. Since the configurations of the attenuation units 280 and 290 are the same, in the following explanation, for convenience of explanation, the attenuation unit 280 is representatively explained and explanation is omitted about the attenuation unit 290.

As shown in FIGS. 19 and 20, in the vibration generation device 200 in this embodiment, the base side coupling section 281 includes a bar-like shaft section 281b and the vibrating unit side coupling section 282 includes a frame-like frame section 282b. The shaft section 281b is coupled to the substrate 211 of the base 210 via a pair of third column sections 216a and 216b. On the other hand, the frame section 282b is coupled to the supporting section 225 of the vibrating unit 220.

According to the fourth embodiment explained above, it is possible to exert the same effects as the effects in the first embodiment explained above.

### Fifth Embodiment

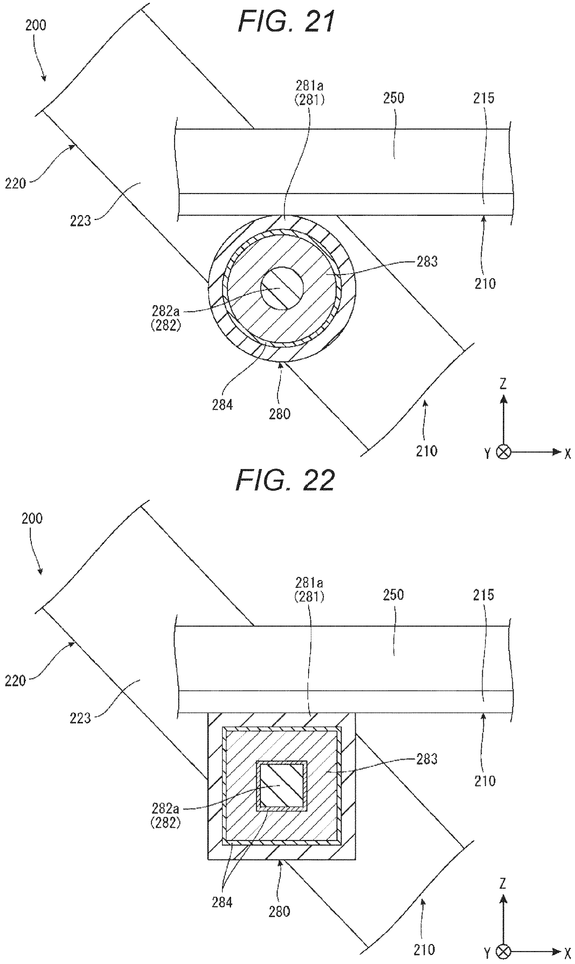

FIG. 21 is an enlarged sectional view in which an attenuation unit included in a vibration generation device according to a fifth embodiment is viewed from a front surface side.

The vibration generation device 200 according to this embodiment is the same as the vibration generation device 200 in the first embodiment explained above except that configurations of the attenuation units 280 and 290 are different from the configurations in the first embodiment. In the following explanation, concerning the vibration generation device 200 in this embodiment, differences from the first embodiment explained above are mainly explained and explanation is omitted concerning similarities to the first embodiment. In the figures in this embodiment, the same components as the components in the embodiments explained above are denoted by the same reference numerals and signs. Since the configurations of the attenuation units 280 and 290 are the same, in the following explanation, for convenience of explanation, the attenuation unit 280 is representatively explained and explanation is omitted about the attenuation unit 290.

As shown in FIG. 21, in the vibration generation device 200 in this embodiment, the shaft section 282a is formed in a columnar shape and the frame section 281a and the viscoelastic member 283 are respectively formed in annular shapes. With the configuration explained above, it is possible to exert equivalent damping forces in directions orthogonal to the Y axis. That is, it is possible to exert equivalent damping effects on vibrations in the vertical direction like the vibrations A1 and A4 shown in FIGS. 7 and 10 and vibrations in the oblique direction like the vibrations A2 and A3 shown in FIGS. 8 and 9.

According to the fifth embodiment explained above, it is possible to exert the same effects as the effects in the first embodiment explained above.

### Sixth Embodiment

FIG. 22 is an enlarged sectional view in which an attenuation unit included in a vibration generation device according to a sixth embodiment is viewed from a front surface side.

The vibration generation device 200 according to this embodiment is the same as the vibration generation device 200 in the first embodiment explained above except that configurations of the attenuation units 280 and 290 are different from the configurations in the first embodiment. In the following explanation, concerning the vibration generation device 200 in this embodiment, differences from the first embodiment explained above are mainly explained and explanation is omitted concerning similarities to the first embodiment. In the figures in this embodiment, the same components as the components in the embodiments explained above are denoted by the same reference numerals and signs. Since the configurations of the attenuation units 280 and 290 are the same, in the following explanation, for convenience of explanation, the attenuation unit 280 is representatively explained and explanation is omitted about the attenuation unit 290.

As shown in FIG. 22, in the vibration generation device 200 in this embodiment, the viscoelastic member 283 is joined to both of the shaft section 282a and the frame section 281a via the joining member 284. Consequently, since tensile stress is applied to the viscoelastic member 283 during the operation of the attenuation unit 280 in addition to compression stress, vibration can be more efficiently attenuated. Responsiveness of extension and contraction of the viscoelastic member 283 to the vibration is improved. It is possible to exert an excellent damping force to vibration having a higher frequency.

According to the sixth embodiment explained above, it is possible to exert the same effects as the effects in the first embodiment explained above.

### Seventh Embodiment

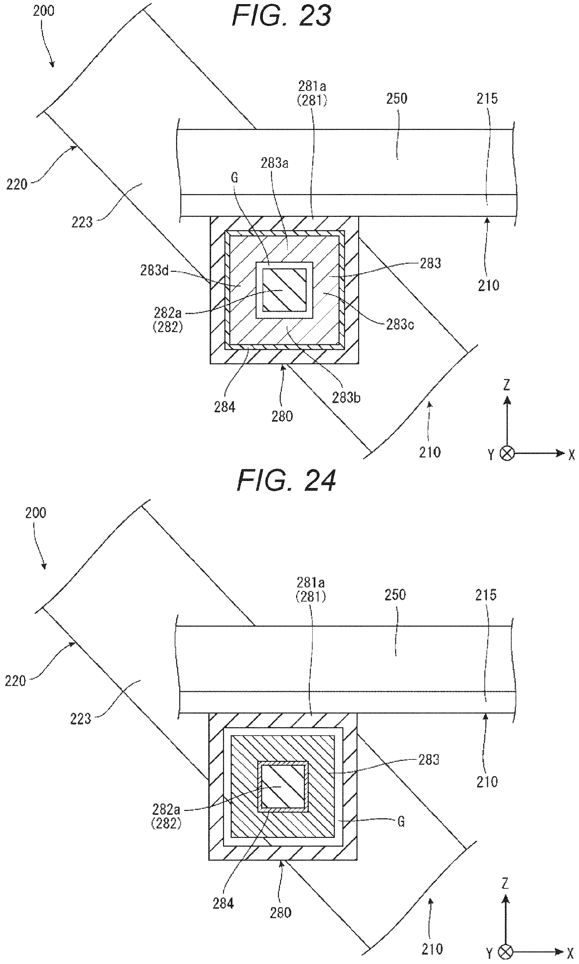

FIG. 23 is an enlarged sectional view in which an attenuation unit included in a vibration generation device according to a seventh embodiment is viewed from a front surface side. FIG. 24 is an enlarged sectional view showing a modification of the attenuation unit.

The vibration generation device 200 according to this embodiment is the same as the vibration generation device 200 in the first embodiment explained above except that configurations of the attenuation units 280 and 290 are different from the configurations in the first embodiment. In the following explanation, concerning the vibration generation device 200 in this embodiment, differences from the first embodiment explained above are mainly explained and explanation is omitted concerning similarities to the first embodiment. In the figures in this embodiment, the same components as the components in the embodiments explained above are denoted by the same reference numerals and signs. Since the configurations of the attenuation units 280 and 290 are the same, in the following explanation, for convenience of explanation, the attenuation unit 280 is representatively explained and explanation is omitted about the attenuation unit 290.

As shown in FIG. 23, in the vibration generation device 200 in this embodiment, the inner diameter of the viscoelastic member 283 is larger than the outer diameter of the shaft section 282a. In the natural state, a gap G is formed between the shaft section 282a and the viscoelastic member 283. That is, the viscoelastic member 283 is disposed to be separated from the shaft section 282a. The size of the gap G is set such that the shaft section 282a and the viscoelastic member 283 are in contact during vibration. By forming the gap G, it is possible to insert the shaft section 282a into the viscoelastic member 283 with force smaller than the force in the first embodiment explained above. Therefore, the attenuation unit 280 is more easily assembled. It is possible to adjust a damping force of the attenuation unit 280 according to the size of the gap G in addition to the size and the material of the viscoelastic member 283. Accordingly, it is possible to finely adjust the damping force.

The configuration of the attenuation unit 280 is not limited to this. For example, as shown in FIG. 24, the outer diameter of the viscoelastic member 283 may be smaller than the inner diameter of the frame section 281a. In the natural state, the gap G may be formed between the frame section 281a and the viscoelastic member 283. With the configuration explained above, it is possible to exert the same effects as the effects in this embodiment.

As explained above, in the attenuation unit 280 in this embodiment, the viscoelastic member 283 is disposed to be separated from the base side coupling section 281 or the vibrating unit side coupling section 282. Consequently, the attenuation unit 280 is more easily assembled. It is also possible to adjust the damping force of the attenuation unit 280 according to the size of the gap G in addition to the size and the material of the viscoelastic member 283. Accordingly, it is possible to finely adjust the damping force.

According to the seventh embodiment explained above, it is possible to exert the same effects as the effects in the first embodiment explained above.

### Eighth Embodiment

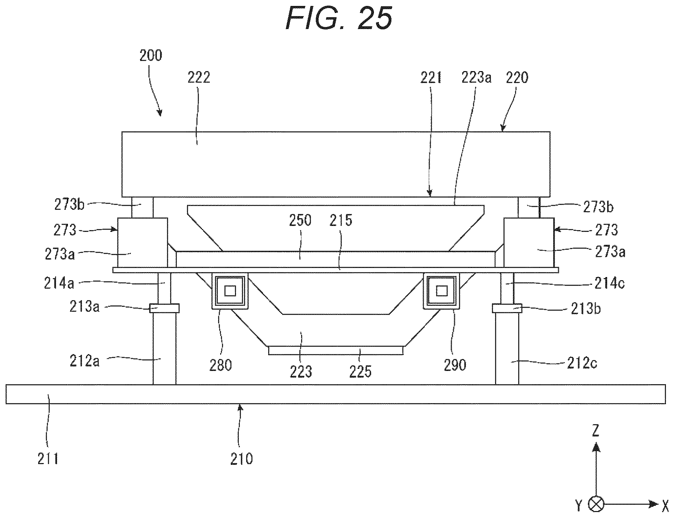

FIG. 25 is a front view of a vibration generation device according to an eighth embodiment.

The vibration generation device 200 according to this embodiment is the same as the vibration generation device 200 in the first embodiment explained above except that configurations of the spring units 230 and 240 and the vibration generating unit 270 are different from the configurations in the first embodiment. In the following explanation, concerning the vibration generation device 200 in this embodiment, differences from the first embodiment explained above are mainly explained and explanation is omitted concerning similarities to the first embodiment. In the figures in this embodiment, the same components as the components in the embodiments explained above are denoted by the same reference numerals and signs.

As shown in FIG. 25, in the vibration generation device 200 in this embodiment, the spring units 230 and 240 are omitted. Instead, the vibration generating unit 270 includes four voice coil motors 273 functioning as electromagnetic vibration generators that couple the base 210 and the vibrating unit 220. The four voice coil motors 273 are separately disposed at four corners of the vibrating unit 220 and support the vibrating unit 220 with good balance. In FIG. 25, only two voice coil motors 273 disposed on the paper surface near side (the Y-axis direction minus side) are shown. However, two voice coil motors 273 are also disposed on the inner side (the Y-axis direction plus side) of the voice coil motors 273.

The voice coil motors 273 include main bodies 273a and vibration shafts 273b that are located on the upper side of the main bodies 273a and vibrate in the vertical direction with respect to the main bodies 273a with energization. The main bodies 273a are fixed to the base 210 and the vibration shafts 273b are fixed to the vibrating unit 220. However, not only this, but the voice coil motors 273 may be vertically reversely disposed, the main bodies 273a may be fixed to the vibrating unit 220, and the vibration shafts 273b may be fixed to the base 210. One of a fixed side and a vibration side of the voice coil motors 273 may be a coil and the other may be a magnet or one may be an electromagnet and the other may be magnetic body metal.

With the configuration explained above, by controlling magnitudes and timings of vibrations of the voice coil motors 273, it is possible to apply the vibrations A1, A2, A3, and A4 explained above to the vibrating unit 220. Since the vibration generating unit 270 functions as the spring units 230 and 240 as well, it is possible to reduce the number of components of the vibration generation device 200. The configuration of the vibration generation device 200 is simplified.

According to the eighth embodiment explained above, it is possible to exert the same effects as the effects in the first embodiment explained above.

The vibration generation device and the pickup system of the present disclosure are explained above based on the illustrated embodiments. However, the present disclosure is not limited to this. The components of the units can be replaced with any components having the same functions. Any other components may be added to the present disclosure. The embodiments may be combined as appropriate.

## Claims

1. A vibration generation device comprising:
a base;
a vibrating unit including a trough including a placement surface on which a workpiece is placed;
a spring unit configured to couple the base and the vibrating unit;
a vibration generating unit configured to vibrate the vibrating unit while elastically deforming the spring unit; and
an attenuation unit configured to couple the base and the vibrating unit and attenuate the vibration of the vibrating unit, wherein
the attenuation unit includes a base side coupling section coupled to the base, a vibrating unit side coupling section coupled to the vibrating unit, and a viscoelastic member interposed between the base side coupling section and the vibrating unit side coupling section in each of a first direction orthogonal to the placement surface and a second direction orthogonal to the first direction.

2. The vibration generation device according to claim 1, wherein the vibration generating unit includes a first vibration motor and a second vibration motor, rotating shafts of which extend along the placement surface and are parallel to each other.

3. The vibration generation device according to claim 2, wherein the second direction is a direction orthogonal to the rotating shafts.

4. The vibration generation device according to claim 3, wherein
a pair of the attenuation units is disposed side by side in the second direction, and
the first vibration motor and the second vibration motor are disposed between the two attenuation units.

5. The vibration generation device according to claim 1, wherein one of the base side coupling section and the vibrating unit side coupling section includes a bar-like shaft section, another includes a frame-like frame section surrounding the shaft section, and the viscoelastic member is disposed between the shaft section and the frame section.

6. The vibration generation device according to claim 5, wherein the viscoelastic member has an annular shape surrounding the shaft section.

7. The vibration generation device according to claim 5, wherein the viscoelastic member is joined to at least one of the base side coupling section and the vibrating unit side coupling section.

8. The vibration generation device according to claim 5, wherein the viscoelastic member is disposed to be separated from the base side coupling section or the vibrating unit side coupling section.

9. A pickup system comprising:
a vibration generation device on which a workpiece is placed;
a vision configured to image the workpiece placed on the vibration generation device; and
a robot configured to pick up, based on an imaging result of the vision, the workpiece placed on the vibration generation device, wherein
the vibration generation device includes:
a base;
a vibrating unit including a trough including a placement surface on which the workpiece is placed;
a spring unit configured to couple the base and the vibrating unit;
a vibration generating unit configured to vibrate the vibrating unit while elastically deforming the spring unit; and
an attenuation unit configured to couple the base and the vibrating unit and attenuate the vibration of the vibrating unit, and
the attenuation unit includes a base side coupling section coupled to the base, a vibrating unit side coupling section coupled to the vibrating unit, and a viscoelastic member interposed between the base side coupling section and the vibrating unit side coupling section in each of a first direction orthogonal to the placement surface and a second direction orthogonal to the first direction.
